# EUROPEAN PATENT APPLICATION

(11) **EP 1 211 850 A1**
(43) Date of publication of application: **05.06.2002**
(21) Application number: 01936917.2
(22) Date of filing: 08.06.2001
(51) Int. Cl.: H04L 12/44

(54) **OPTICAL MULTIPLE BRANCHING COMMUNICATE SYSTEM, PARENT STATION DEVICE USED THEREFORE, CHILD STATION DEVICE, OPTICAL MULTIPLE BRANCHING COMMUNICATION BAND CONTROL METHOD**

(30) Priority: 19.06.2000 JP 2000183687
(71) Applicant: MITSUBISHI DENKI KABUSHIKI KAISHA, Tokyo 100-8310 (JP)
(72) Inventor: ICHIBANGASE, Hiroshi, Chiyoda-ku Tokyo 100-8310 (JP); KOZAKI, Seiji, Chiyoda-ku Tokyo 100-8310 (JP); YOKOTANI, Tetsuya, Chiyoda-ku Tokyo 100-8310 (JP); AKITA, Minoru, Chiyoda-ku Tokyo 100-8310 (JP)
(74) Representative: Pfenning, Meinig & Partner GbR
(86) International application number: JP0104848
(87) International publication number: WO0199352

(57) **Abstract**

Slave stations (20-1 - 20-3) detect whether the buffer resident quantity in a buffer (25) is equal to or larger than a predetermined threshold. Each slave station comprises a buffer resident detection section (26) for notifying the detected results to a PT changing section (24). The PT changing section (24) changes the PT's in the ATM headers of the ATM cells which have been read out from the buffer (25) when there is a notification from the buffer resident detection section (26) that the buffer quantities are equal to or larger than the predetermined threshold. A master station (10) comprises a PT extracting section (13) for extracting PT's in ATM cells, and a shared-band allocation section (12) which generates pieces of band allocation information for slave stations (20-1 - 20-3) for sending the ATM cells which the PT extracting section (13) has extracted, and simultaneously broadcasts pieces of the band allocation information to each slave station (20-1 - 20-3) for band allocation control of each slave station (20-1 - 20-3).

## Description

### TECHNICAL FIELD

The present invention relates to an optical multi-branched communication system in which a plurality of slave station devices share a transmission medium and a transmission band, a master station device notifies band allocation information for controlling transmission bands to be allocated to each slave station device, and each slave station device transmits at a time sharing base transmission information to the master station device based on the band allocation information notified from the master station device. The present invention relates to the master station device, the slave station devices, and a method of controlling optical multi-branched communication bands, used for the system of the present invention.

### BACKGROUND ART

An optical network, for example, which is described in "Broadband optical access systems based on Passive Optical Networks (PON)",ITU-T Recommendation G.983.1, 1998/10, has been conventionally known as a means in which a plurality of slave stations share a transmission medium and a transmission band, and each slave station transmits data to a master station by band control of the master station.

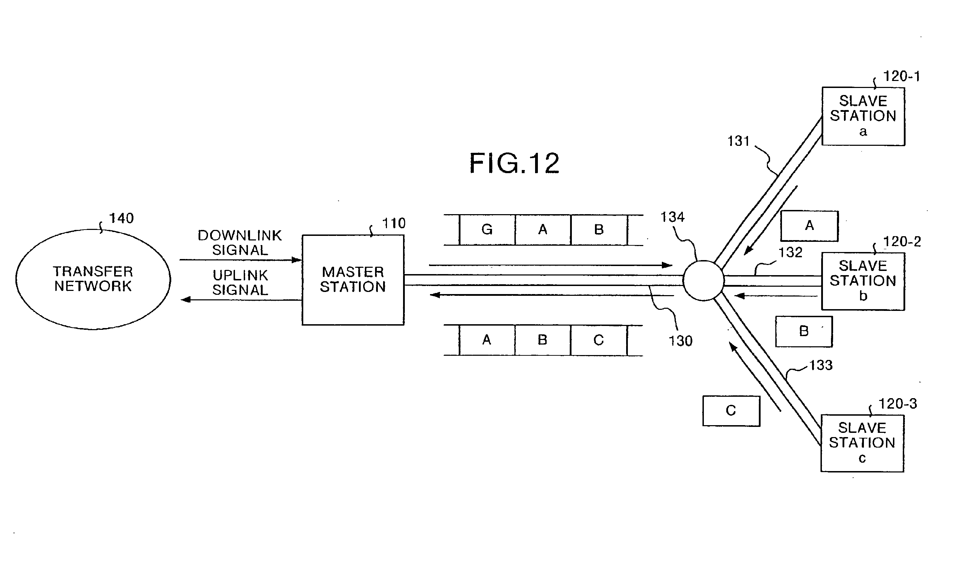

Fig. 12 is a block diagram showing a schematic configuration of the optical network. In Fig. 12, a master station 110 is connected to a plurality of slave stations 120-1 - 120-3 through trunk optical fibers 130, an optical splitter 134, and branch optical fibers 131-133. The master station 110 is connected to a transfer network 140 such as an ATM network, sends downlink signals received from the transfer network 140 to the trunk optical fibers 130 after conversion into optical signals; and the optical signals distributed by the optical splitter 134 are simultaneously broadcast to each slave station 120-1 - 120-3 through the branch optical fibers 131 - 133.

The optical signals for the downlink direction have management information "G" to be notified from the master station 110 to each of the stations 120-1 - 12-3. This management information "G" includes band-control information for controlling bands between the master station 110 and each slave station 120-1 - 120-3. Each slave station 120-1 - 120-3 recognizes, based on the band control information, time slots for pieces of the transmission information "A" - "C" to be sent from each own slave station to the master station 110, and pieces of the transmission information "A" - "C" are sent at timing according to the above-mentioned time slots. That is, pieces of the transmission information "A" - "C" from each slave station 120-1 - 120-3 are transmitted to the master station 110 after multiplexing at a time sharing base, and, thereafter, to the transfer network 140 as multiplexed uplink signals

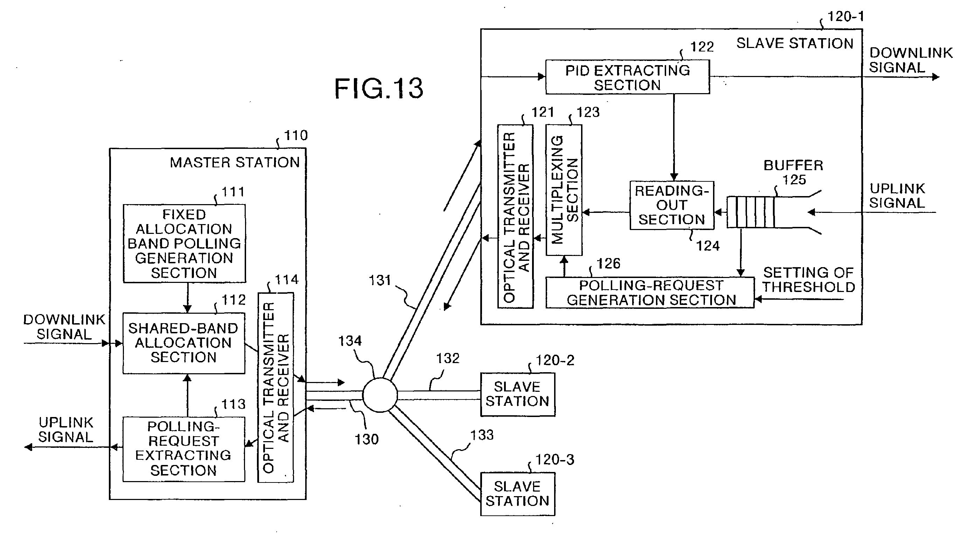

Now, band control processing between the master station 110 and the slave stations 120-1 - 120-3 will be described, referring to Fig. 13. Fig. 13 is a block diagram showing a configuration of a conventional optical multi-branched communication system. In Fig. 13, a fixed allocation band polling generation section 111 in the master station 110 generates polling ID's (PID's) for fixed allocation bands which have been allocated for each slave station 120-1 - 120-3 beforehand, and sends the ID's to a shared-band allocation section 112. The PID's are pieces of information for identifying each slave station 120-1 - 120-3 which has been predetermined. It is configured that the fixed allocation bands are corresponding to the number of time slots which are fixedly used, among plural time slots for the uplink direction, by each slave station 120-1 - 120-3, and fixed allocation bands which slave stations use are proportional to the number of time slots to be used. Accordingly, it is configured that larger bands are allocated to slave stations to which larger number of PID's are allocated.

A polling-request extracting section 113 extracts polling requests sent form each slave station 120-1 - 120-3, and sends the polling requests to the shared-band allocation section 112. The shared-band allocation section 112 performs band allocation of remaining redundant bands obtained by eliminating the fixed allocation bands from the whole bands, based on the polling requests, and band allocation information, which includes PID's as the allocation results, and those input from a fixed allocation band polling generation section 111, is simultaneously broadcast to each slave station 120-1 - 120-3.

A PID extracting section 122 in each slave station 120-1 - 120-3 extracts PID's as the band allocation information for output to a reading-out section 124. The reading-out section 124 reads out uplink signals which have been input to a buffer 125, corresponding to the positions of the time slots which extracted own PID's indicate, and outputs the signals to a multiplexing section 123. On the other hand, a polling request generation section 126 detects that the resident quantities of the uplink signals in the buffer 125 are equal to or larger than a predetermined threshold, and, when the quantity is equal to or larger than the threshold, a polling request is generated, and, thereafter, sent to the multiplexing section 123. The multiplexing section 123 multiplexes uplink signals, which have been read out at the reading-out section 124, and the polling request, which have been input from the polling request generation section 126, and the multiplexed signals are sent from an optical transmitter and receiver 121 at timing according to the time slots which have been indicated by the PID's.

The polling requests sent from the slave stations 120-1 - 12-3 are extracted by the polling-request extracting section 113 in the master station 110, and the shared-band allocation section 112 controls use of the redundant bands for each slave station 120-1 - 12-3 based on the polling requests. Accordingly, overflow of ATM cells of the uplink signals residing in the buffers 125 of each slave station 120-1 - 12-3, and the improvement in the transmission efficiency is realized.

However, there have been problems that usable bands for the uplink direction are limited, and the transmission efficiency is reduced in the conventional optical multi-branched communication system where one time slot is used at information transmission of the polling requests, as each slave station 120-1 - 120-3 is required to send the polling requests to the master station 110.

It is an object of the present invention to provide an optical multi-branched communication system in which further improvement in the efficiency of transmission of transmission information to be transmitted from a plurality of slave station devices to a master station device. It is also an object of the present invention to provide a master station device, slave station devices, and a method of controlling optical multi-branched communication bands, used for the system of the present invention.

### DISCLOSURE OF THE INVENTION

In the optical multi-branched communication system according to one aspect of the present invention, in the optical multi-branched communication system in which a plurality of slave station devices share a transmission medium and a transmission band; a master station device notifies band allocation information for controlling allocation of transmission bands to be used for each slave station device to each of the slave stations; and each slave station device transmits transmission information to the master station device, based on band allocation information notified from the master station device, the master station device comprises an extracting unit which extracts traffic notification information which is described in predetermined information in the transmission information transmitted from each slave station device, notifies the traffic state of the transmission information, performs allocation processing of the transmission bands, based on the traffic notification information which the extracting unit has extracted, and notifies the allocated results to each slave station device as the band allocation information.

According to the above-mentioned aspect, it is configured that the extracting unit of the master station device extracts traffic notification information which is described in predetermined information in the transmission information transmitted from each slave station device, and notifies the traffic state of the transmission information; and the master station device performs allocation processing of the transmission bands, based on the extracted traffic notification information, and notifies the allocation results to each slave station device as the band allocation information:

In the optical multi-branched communication system according to another aspect of the present invention, in the optical multi-branched communication system in which a plurality of slave stations share a transmission medium and a transmission band; a master station device notifies band allocation information for controlling allocation of transmission bands to be used for each slave station device to each of the slave stations; and each slave station device transmits transmission information to the master station device, based on band allocation information notified from the master station device, the plural slave station devices comprises congestion detection unit which detects whether the resident quantities of the transmission information to be transmitted to the master station device is equal to or larger than a predetermined threshold, and, changing unit which changes the contents of the traffic notification information, when the congestion detection unit detects that the resident quantities are equal to or larger than the predetermined threshold, the master station device comprises extracting unit which extracts traffic notification information which is described in predetermined information in the transmission information transmitted from each slave station device; and the master station device performs allocation processing of the transmission bands, based on the traffic notification information extracted by the extracting unit, and notifies the allocation results as the band allocation information to each slave station device.

According to the above-mentioned aspect, it is configured that the congestion detection unit of a plurality of the slave station devices detects that the resident quantities of the transmission information to be transmitted to the master station device is equal to or larger than a predetermined threshold; the changing unit changes the contents of the traffic notification information which is described in predetermined information in the transmission information and notifies the traffic state of the transmission information, when the congestion detection unit detects that the resident quantities are equal to or larger than the predetermined threshold to send the contents to the master station device; the extracting unit of the master station device extracts traffic notification information which is described in predetermined information in the transmission information transmitted from each slave station device; the master station device per form allocation processing of the transmission bands, based on the traffic notification information extracted by the extracting unit, and notifies the allocation results to each slave station device as the band allocation information; and, thereby, the band allocation control in each station device is performed.

In the above-mentioned aspects, each of the slave station devices further comprises a plurality of buffers for temporarily accumulating plural series of pieces of transmission information to be output to the master station device; and a selective reading-out unit which selectively reads-out, based on the band allocation information from the master station device, each series of pieces of transmission information which have been accumulated temporarily in a plurality of the buffers, wherein the changing unit changes traffic notification information of each series of pieces of transmission information which have been read out from each buffer.

According to the above-mentioned aspect, it is configured that the changing unit changes the traffic notification information of each series of pieces of transmission information which have been read out from each buffer.

In the above-mentioned aspects, each of the slave station devices further comprises a plurality of buffers for temporarily accumulating plural series of pieces of transmission information to be output to the master station device, plural pieces of reading-out unit which reads-out, based on the band allocation information from the master station device, a series of pieces of transmission information which are corresponding to the plural buffers respectively, and have been temporarily accumulated in each buffer, and an INCLUSIVE-OR operation unit which performs INCLUSIVE-OR operation of pieces of the transmission information, which have been read out by the plural pieces of reading-out unit, to send the operation results to the master station device, wherein the changing unit changes the traffic notification information of each series of pieces of transmission information which have been read out from each buffer; and the master station device performs band allocation processing for each series of pieces of transmission information which have been input to the plural buffers.

According to the above-mentioned aspect, it is configured that the master station device performs band allocation processing, as one unit, of plural series of pieces of transmission information which have been input to the plural buffers.

In the above-mentioned aspects, the optical multi-branched communication system further comprises an information multiplexing unit, which is at a previous stage to the slave station devices, for multiplexing beforehand plural series of pieces of transmission information which have been input to the slave station devices; and a congestion detection unit of the slave station devices performs congestion notification to the information multiplexing unit when the resident quantity of transmission information to be transmitted to the master station device is equal to or larger than the predetermined threshold, wherein the information multiplexing unit performs control to reducing the number of pieces of transmission information, which are sent to the slave station devices, to be multiplexed when the congestion notification is received.

According to the above-mentioned aspects, it is configured that the congestion detection unit performs congestion notification to the information multiplexing unit when the resident quantity of transmission information to be transmitted to the master station device is equal to or larger than the predetermined threshold; and the information multiplexing unit performs control to reducing the number of pieces of transmission information, which are sent to the slave station devices, to be multiplexed when the congestion notification is received.

In the above-mentioned aspects, the master station device comprises a band allocation unit which processes allocation of the transmission bands based on the traffic notification information which the extracting unit has extracted, wherein the band allocation unit divides the whole bands for all slave station devices into fixed bands which have been previously set for each slave station device, and redundant bands which each slave station device share, and performs allocation processing of the redundant bands based on the traffic notification information extracted by the extracting unit.

According to the above-mentioned aspects, it is configured that band allocation unit of the master station device divides the whole bands for all slave station devices into fixed bands which have been previously set for each slave station device, and redundant bands which each slave station device share, and performs allocation processing of the redundant bands based on the traffic notification information extracted by the extracting unit.

In the above-mentioned aspects, the band allocation information is allocated for each logical path of the transmission information.

According to the above-mentioned aspect, control considering service quality of service allocated to each logical path may be realized, as the band allocation information is configured to be allocated for each logical path.

In the above-mentioned aspects, the traffic notification information is payload-type information in ATM cell headers.

According to the above-mentioned aspect, it is configured that the traffic notification information is payload-type information in the ATM cell headers, and the processing interchangeability with the ATM layer may be kept.

In the above-mentioned aspects, the extracting unit changes the traffic notification information again to output the transmission information.

According to the above-mentioned aspect, it is configured that the extracting unit changes the traffic notification information again to output the transmission information, and the contents of the transmission information are not changed.

The master station device according to still another aspect of the present invention is used for an optical multi-branched communication system in which a plurality of slave station devices share a transmission medium and a transmission band, wherein the master station device notifies band allocation information for controlling allocation of transmission bands to be used for each slave station device to each of the slave stations, and each slave station device transmits transmission information to the master station device, based on band allocation information notified from the master station device, an extracting unit which extracts traffic notification information which is described in predetermined information in the transmission information transmitted from each slave station device is provided, allocation processing of the transmission bands, based on the traffic notification information which the extracting unit has extracted is performed; and the allocated results is notified to each slave station device as the band allocation information.

According to the above-mentioned aspect, it is configured that the extracting unit extracts traffic notification information which is described in predetermined information in the transmission information transmitted from each slave station device, and notifies the traffic state of the transmission information, the master station device performs allocation processing of the transmission bands, based on the traffic notification information which the extracting unit has extracted, and the allocated results is notified to each slave station device as the band allocation information.

The slave station device according to still another aspect of the present invention is used for an optical multi-branched communication system in which a plurality of the slave station devices share a transmission medium and a transmission band, wherein the master station device notifies band allocation information for controlling allocation of transmission bands to be used for each slave station device to each of the slave stations, and each slave station device transmits transmission information to the master station device, based on band allocation information notified from the master station device, congestion detection unit which detects whether the resident quantity of transmission information to be transmitted to the master station device is equal to or larger than a predetermined threshold, and changing unit which changes the contents of the traffic notification information which is described in predetermined information of the transmission information when the congestion detection unit detects that the resident quantity is equal to or larger than the predetermined threshold, and notifies the traffic state of the transmission information are provided.

According to the above-mentioned aspect, it is configured that the congestion detection unit detects whether the resident quantity of transmission information to be transmitted to the master station device is equal to or larger than the predetermined threshold, and the changing unit notifies the traffic state of the transmission information, when the congestion detection unit detects that the resident quantity is equal to or larger than the predetermined threshold, which has been described in predetermined information of the transmission information.

In the above-mentioned aspect, each of the slave station devices further comprises an information multiplexing unit, which is at a previous stage to the slave station devices, for multiplexing beforehand a series of plural pieces of transmission information which have been input to the slave station devices, and the congestion detection unit performs congestion notification, when the resident quantity of transmission information to be transmitted to the master station device is equal to or larger than the predetermined threshold, to the information multiplexing unit, which is at a previous stage to the slave station devices, for multiplexing beforehand plural series of pieces of transmission information which have been input to the slave station devices to reduce the sending quantity of transmission information from the information multiplexing unit.

According to the above-mentioned aspect, it is configured that the congestion detection unit performs congestion notification, when the resident quantity of transmission information to be transmitted to the master station device is equal to or larger than the predetermined threshold, to the information multiplexing unit, which is at a previous stage to the slave station devices, for multiplexing beforehand plural series of pieces of transmission information which have been input to the slave station devices and the sending quantity of transmission information from the information multiplexing unit is reduced.

In the method of controlling optical multi-branched communication bands according to still another aspect of the present invention, a plurality of slave station devices share a transmission medium and a transmission band; a master station device notifies band allocation information for controlling allocation of transmission bands to be used for each slave station device to each slave station; and each slave station device transmits transmission information to the master station device, based on band allocation information notified from the master. station device, a congestion detection step in which each slave station device detects whether the resident quantity of transmission information to be transmitted to the master station device is equal to or larger than a predetermined threshold, a changing step at which, when it is detected at the congestion detection step that the resident quantity is equal to or larger than the predetermined threshold, the contents of the traffic notification information, which is described in predetermined information of the transmission information are changed, and the traffic state of the transmission information is notified to a congestion state, an extracting step in which the master station device for extracts traffic notification information in the transmission information, and a notification step where the master station device performs allocation processing of the transmission bands, based on the traffic notification information which has been extracted at the extraction step; and notifies the allocated results to each slave station device as the band allocation information are provided.

According to the above-mentioned aspect, it is configured that each slave station device detects at the congestion detection step whether the resident quantity of transmission information to be transmitted to the master station device is equal to or larger than a predetermined threshold; when it is detected at the congestion detection step that the resident quantity is equal to or larger than the predetermined threshold, the contents of the traffic notification information which is described in predetermined information of the transmission information and notifies the traffic state of the transmission information is changed to a congestion state ar the changing step; the master station device extracts traffic notification information in the transmission information at the extracting step: the master station device performs allocation processing of the transmission bands, based on the traffic notification information which has been extracted at the extraction step, and notifies the allocated results to each slave station device as the band allocation information at the notification step, and, thereby, band allocation control for each slave station device is performed.

In the method of controlling optical multi-branched communication bands according to still another aspect of the present invention, congestion notification is performed to the information multiplexing unit, which is at a previous stage to the slave station devices, for multiplexing beforehand transmission information which are to be input into the slave station devices, when the resident quantity of transmission information to be transmitted to the master station device is equal to or larger than the predetermined threshold, and, then, the sending quantity of the transmission information from the information multiplexing unit is reduced.

According to the above-mentioned aspect, it is configured that congestion notification is performed, at the congestion detection step, to the information multiplexing unit, which is connected at a previous stage to the slave station devices, for multiplexing beforehand transmission information which are to be input into the slave station devices, when the resident quantity of transmission information to be transmitted to the master station device is equal to or larger than the predetermined threshold, and the sending quantity of the transmission information from the information multiplexing unit is reduced.

In the above-mentioned aspects, the band allocation information is allocated for each logical path of the transmission information.

According to the above-mentioned aspect, control considering service quality of service allocated to each logical path may be realized, as it is configured that the band allocation information is allocated for each logical path.

In the above-mentioned aspects, the traffic notification information is payload-type information in the ATM cell headers, and the processing interchangeability with the ATM layer may be kept.

According to the above-mentioned aspect, it is configured that the traffic notification information is payload-type information in the ATM cell headers.

### BRIEF DESCRIPTION OF THE DRAWINGS

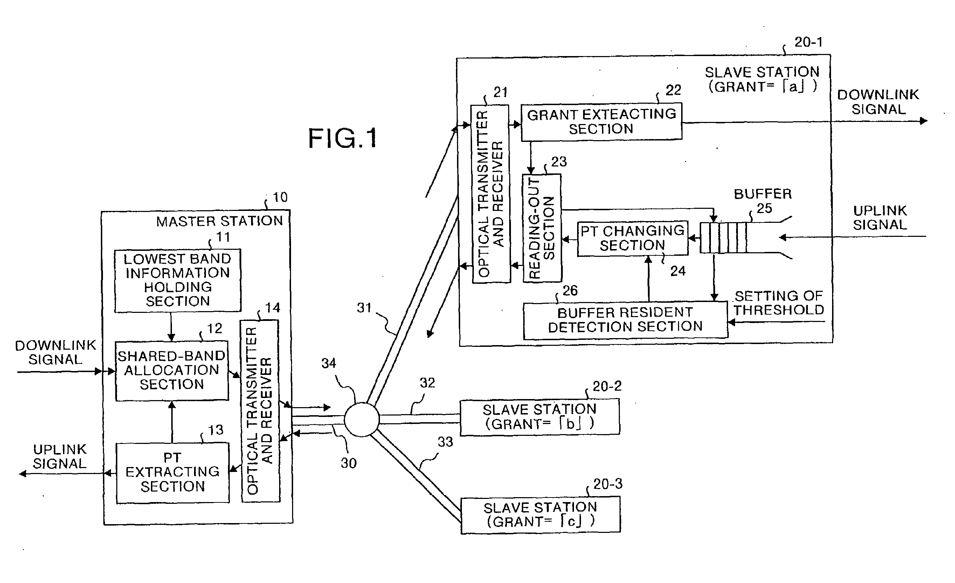

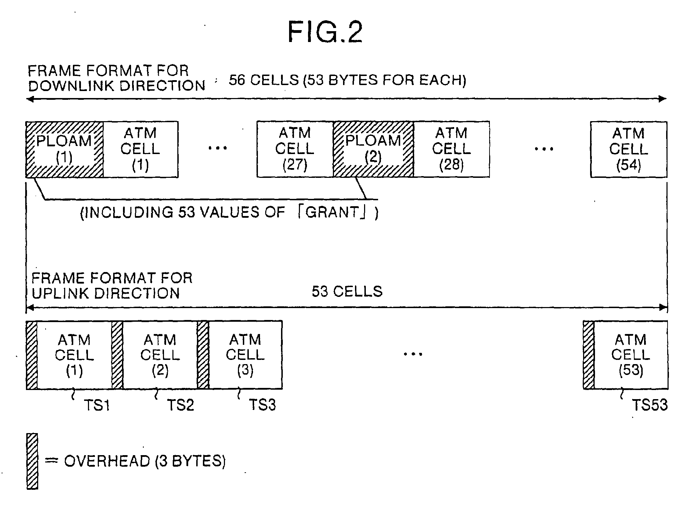

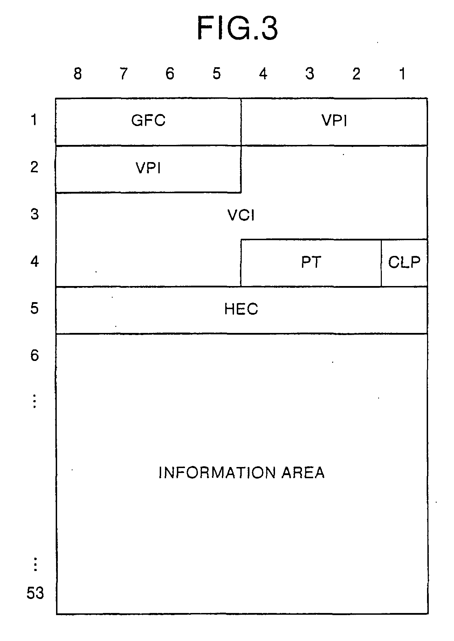

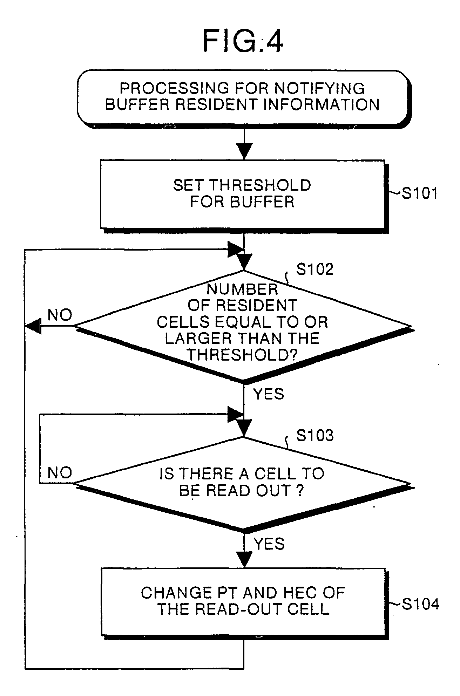

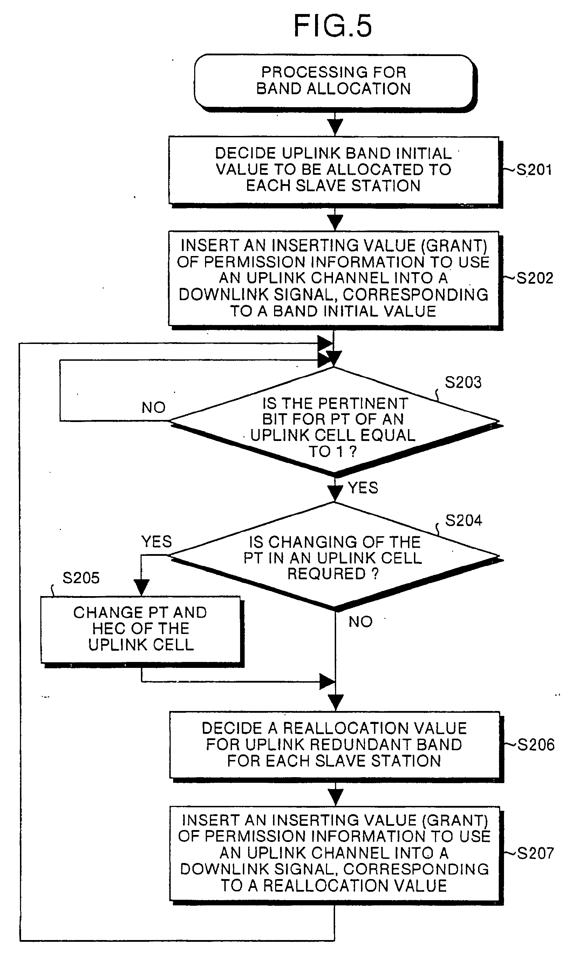

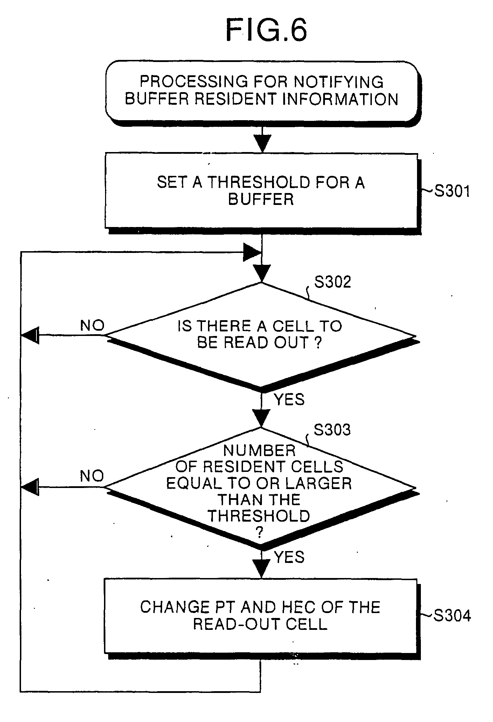

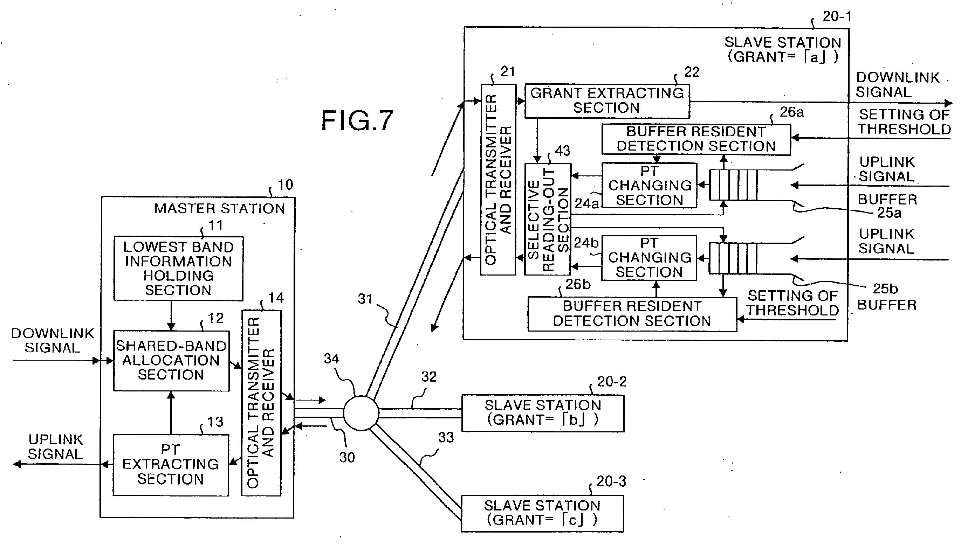

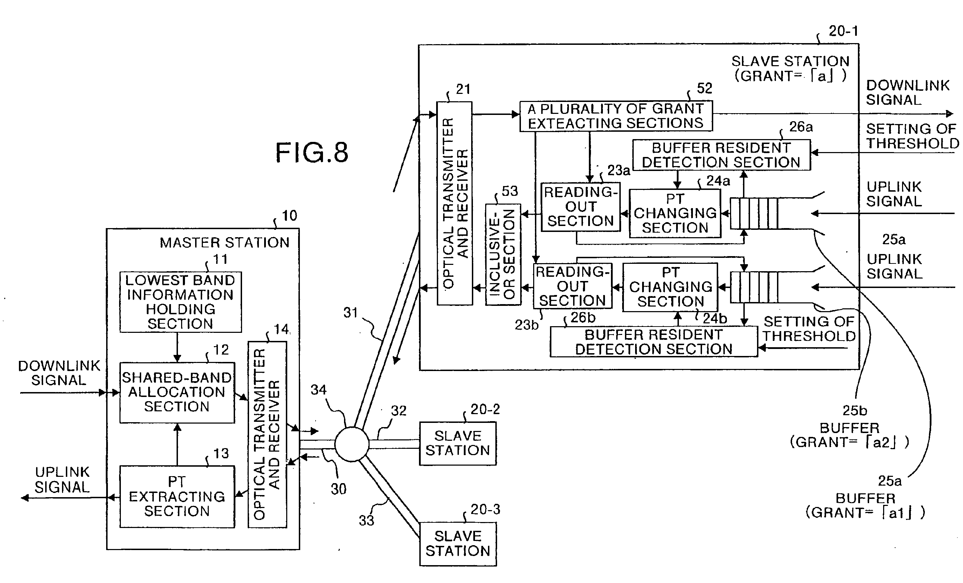

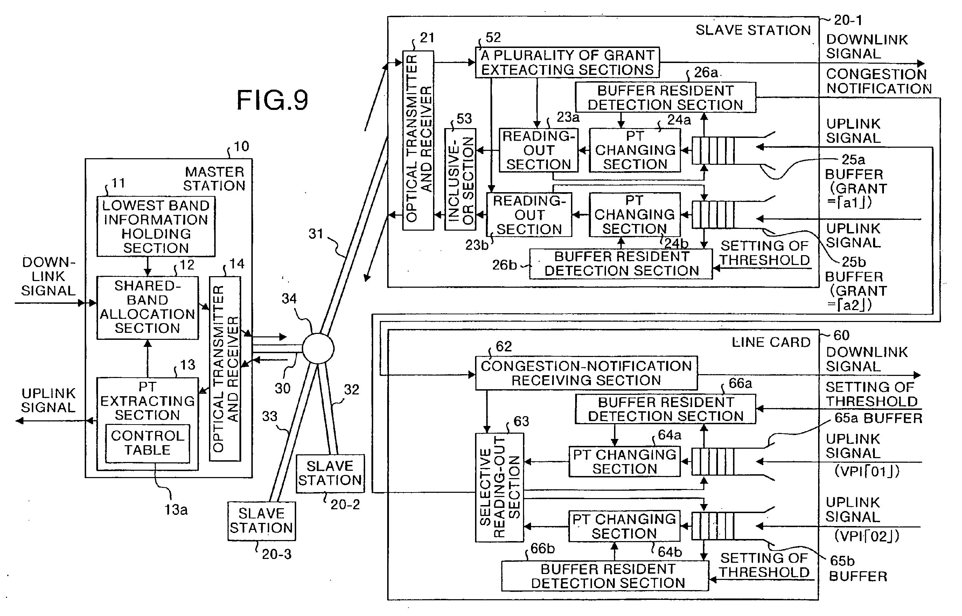

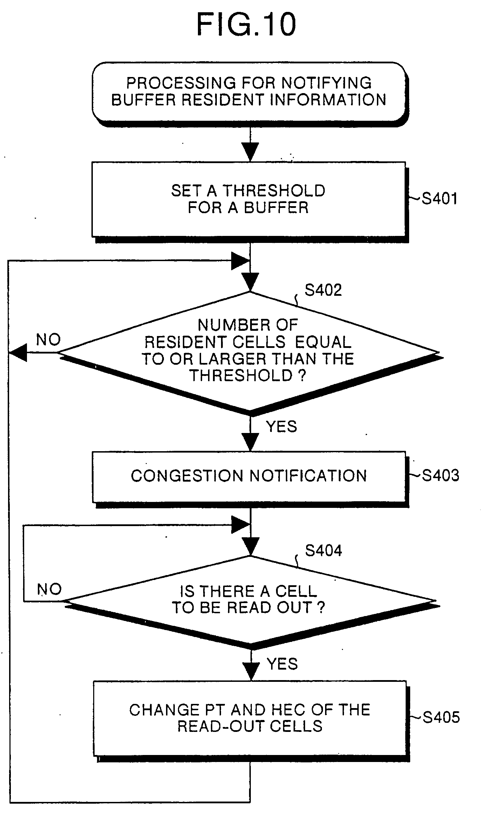

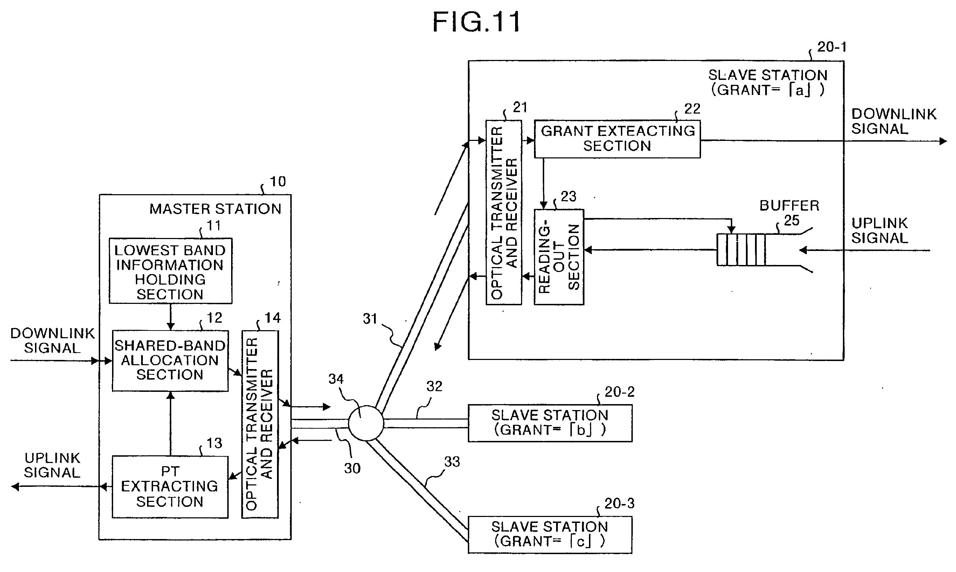

Fig. 1 is a block diagram showing a configuration of an optical multi-branched communication system according to a first embodiment of the present invention; Fig. 2 is a view showing frame formats for the downlink and uplink directions between a master station and a slave station shown in Fig. 1; Fig. 3 is a view showing cell formats of an ATM cell; Fig. 4 is a flow chart showing a processing procedure for notification of buffer resident information at each of the slave stations; Fig. 5 is a flow chart showing a band allocation processing procedure performed by the master station; Fig. 6 is a flow chart showing another processing procedure for notification of buffer resident information performed by the slave stations; Fig. 7 is a block diagram showing a configuration of an optical multi-branched communication system according to a second embodiment of the present invention; Fig. 8 is a block diagram showing a configuration of an optical multi-branched communication system according to a third embodiment of the present invention; Fig. 9 is a block diagram showing a configuration of an optical multi-branched communication system according to a forth embodiment of the present invention; Fig. 10 is a flow chart showing a processing procedure for notification of buffer resident information performed by the slave stations in the optical multi-branched communication system shown in Fig. 9; Fig. 11 is a block diagram showing a configuration of an optical multi-branched communication system according to a fifth embodiment of the present invention; Fig. 12 is a block diagram showing a schematic whole aspect of a conventional optical multi-branched communication system; and Fig. 13 is a block diagram showing a configuration of the conventional optical multi-branched communication system.

### BEST MODE FOR CARRYING OUT THE INVENTION

Embodiments of an optical multi-branched communication system according to the present invention, and a master station device, slave station devices, and a method of controlling optical multi-branched communication bands, which are used in the system according to the present invention, will be described in detail, referring to the accompanying drawings.

### First Embodiment:

Fig. 1 is a block diagram showing a configuration of an optical multi-branched communication system according to the first embodiment of the present invention. In Fig. 1, a master station 10 is connected to a plurality of slave stations 20-1 - 20-3 through trunk line optical fibers 30, an optical splitter 34, and, branch line optical fibers 31 - 33. The optical splitter 34 simultaneously broadcasts optical signals from the master station 10 to each slave station 20-1 - 20-3 after demultiplexing, and multiplexes optical signals from each slave station 20-1 - 20-3 to send the signals to the master station 10. The master station 10 performs band allocation control for multiplexing of uplink signals from each slave station 20-1 - 20-3 on a timesharing base. The uplink signals and the downlink signals are both ATM cells with a fixed length of 53 bytes.

Hereinafter, frame formats for the uplink and downlink directions transmitted between the master station 10 and each slave station 20-1 - 20-3 will be described, referring to Fig. 2. Fig. 2 is a view showing frame formats for the uplink and downlink directions shown in ITU-T Recommendation G.983. 1 (Figure 11/G. 983. 1 - Frame format for 155.52/155.52 Mbit/s PON). In Fig. 2, the frames for the downlink direction comprise cells with a fixed length of 53 bytes, and the frames for the uplink direction comprise cells with a fixed length of 56 bytes obtained by addition of an overhead with a length of 3 bytes to the ATM cells with that of 53 bytes.

The frames for the downlink direction comprise 54 pieces of ATM cells, and two cells for supervisory control (PLOAM: Physical Layer Operations Administration and Maintenance), and PLOAM cells are inserted with a period of 28 cells into the frames. In the PLOAM cells, "GRANT1" - "GRANT27" are inserted into the first PLOAM cell and "GRANT28" - "GRANT54" are inserted into the second PLOAM cell as band allocation information as shown in ITU-T Recommendations G. 983.1 (Table 8/G. 983. 1 - Payload content of downstream PLOAM cell).

The frames for the uplink direction comprise 53 pieces of ATM cells, which form timeslots TS1 - TS53, respectively. "GRANT1" - "GRANT53" which have been described in the PLOAM cells are corresponding to the time slots TS1 - TS53. "GRANT" values are identification information assigned to each slave station 20-1 - 20-3, and "a" - "c" have been previously assigned to each slave station 20-1 - 20-3, respectively, as shown in Fig. 1. Accordingly, each slave station 20-1 - 20-3 may recognize the time slot positions of the ATM cells which the own slave stations are required to transmit by inserting the "GRANT" values of each slave station 20-1 - 20-3 as each "GRANT1" - "GRANT53". Thereby, band allocation control for each slave station 20-1 - 20-3 is realized.

The master station 10 comprises a lowest-band information holding section 11 which holds fixed allocation bands previously set in each slave station 20-1 - 20-3. The reason why the fixed allocation bands are set for each slave station 20-1 - 20-3 is that the ATM cells to be transmitted are sometimes of a real time data kind such as voice data. On the other hand, ATM cells of burst-data, such as data at file transfer, which are generated temporarily or incessantly, are not objects for which fixed allocation bands are set, as transmission delay is allowed, and remaining redundant bands eliminating the fixed allocation bands from the whole bands are allocated to the ATM cells by band control.

A PT (Payload Type) extracting section 13 extracts PT's (Payload Types) in ATM cells which are transmitted from each slave station 20-1-20-3, and notifies pieces of traffic notification information for the slave stations shown in the PT's to a shared-band allocation section 12. The shared-band allocation section 12 generates "GRANT" values for allocating the shared bands to slave stations in a congestion state, based on each "GRANT" value corresponding to the fixed allocation bands input from the lowest band information holding section 11 and, at the same time, traffic notification information for the slave stations notified from the PT extracting section 13; and controls the bands for each slave station 20-1 - 20-3 in a variable manner.

The shared-band allocation section 12 inserts each "GRANT" value into the areas of PLOAM cells corresponding to each time slot, and the inserted results are converted into optical signals in an optical transmitter/receiver 14 for simultaneous broadcasting to each slave station 20-1 - 20-3. with regard to the band allocation which the shared-band allocation section 12 performs, values of "GRANT1" - "GRANT53" are "a", "a", "a", "b", "b", "b", "c", "c", "c", "x", ···, and "x", for example, when the fixed allocation bands for three time slots are set for each slave station 20-1 - 20-3. "a" - "c" are "GRANT" values for each slave station 20-1 - 20-3, respectively, and shows fixed allocation bands. "x" indicates redundant bands which are allocated based on the PT's.

Fig. 3 is a view showing the cell format of an ATM cell. The ATM cell is roughly divided into an ATM cell header and an information area, and GFC (Generic Flow Control); VPI (Virtual Path Identifier); VCI (Virtual Channel Identifier); PT (Payload Type); CLP (Cell Loss Priority); and HEC (Header Error Control) are described in the ATM header. The PT extracting section 13 extracts the PT, and, at the same time, logical paths indicated by the VPI (VCI) for specifying slave stations.

The PT has a three bit configuration. When the ATM cell is in an ABR (Available Bit Rate) mode, "0" at the first bit indicates that the ATM cell is a user cell, and "1" indicates that the ATM one is an OAM cell. The second bit is a bit indicating a traffic state, and "0" of the bit indicates that the cell is not in a congestion state, and "1" does that the cell is in a congestion state. Moreover, the third bit is arbitrary. Accordingly, the shared-band allocation section 12 recognizes that the logical path of an ATM cell is in a congestion state when the first bit of the PT is "0", and the second bit of the ATM cell is "1"; and performs band allocation control for slave station corresponding to the logical path so that the bands are increased.

On the other hand, the GRANT extracting sections 22 in the slave stations 20-1 - 20-3 extracts "GRANT" values in the PLOAM cells notified from the master station 10, and outputs the "GRANT" values to the reading-out section 23. At the timing when the "GRANT" values, which have been set in the own slave stations beforehand, and the extracted "GRANT" values are in agreement, the reading-out section 23 reads out, the ATM cells which have been accumulated in a buffer 25, and the ATM cells are transmitted according to the corresponding time slot from an optical transmitter and receiver 21 to the master station 10 after conversion into optical signals.

It is configured that a buffer resident detection section 26 detects whether the resident quantities of the ATM cells in the buffer 25 is equal to, or larger than a threshold which has been previously set, or not. A PT changing section 24 changes the states of pieces of the traffic notification information in the PT's of the ATM cells which have been read out from the buffer 25 to "1" of the congestion state when the quantities are equal to or larger than the threshold, and outputs the changed information to the reading-out sections 23 . Thereby, as whether ATM cells transmitted from each slave station 20-1 - 20-3 are in a congestion state at each slave station may be notified to the master station 10, and the master station 10 extracts the traffic notification information for appropriate allocation of redundant bands, ATM cells resident in the buffers 25 of each slave station 20-1- 20-3 are eliminated, overflows of the ATM cells from the buffers 25 are prevented, and, accordingly, the ATM cells are configured not to be rejected.

Buffer resident information notification processing performed by the slave stations, and band allocation processing performed by the master station will be described, referring to flow charts shown in Fig. 4 and Fig. 5. In the first place, Fig. 4 is a flow chart showing processing procedures for notification of buffer resident information performed by each slave station. In Fig. 4, in the first place, a threshold for the buffer resident quantities of the ATM cells in the buffer 25 is set in the buffer resident detection section 26 (STEP S101). Subsequently, the buffer resident detection section 26 judges whether the buffer resident quantities are equal to or larger than the threshold (STEP S102).

When the buffer resident quantities are equal to or larger than the threshold (YES at STEP S102), it is judged whether there are, in the buffer 25, cells to be read out (STEP S103). When there are cells to be read out (YES at STEP S103), pieces of traffic notification information in the PT's of the cells to be read out are further changed, and HEC values are changed (STEP S104) following the change, and the processing moves to STEP S102. Here, when the buffer resident quantities are neither equal to nor larger than the threshold (NO at STEP S102), the judgement is repeated, and, when there are no cells to be read out (NO at STEP S103), the judgement is repeated. And, when pieces of the traffic notification information in the PT's have been already set as "1" which shows a congestion state, overwrite is performed at STEP S104.

On the other hand, Fig. 5 is a flow chart showing a band allocation processing procedure performed by the master station. In Fig. 5, the shared-band allocation section 12 decides initial values for uplink bands to be allocated to each slave station (STEP S201), based on the fixed allocation bands, which have been held in the lowest band information holding section 11, for each slave station. Subsequently, inserting values (GRANT value) of pieces of information on permission to use an uplink channel are inserted into PLOAM cells of downlink signals (STEP S202), corresponding to the band initial values.

Thereafter, the PT extracting section 13 extracts the PT's of the uplink cells, and judges whether pieces of the traffic notification information in the extracted PT's are "1" (STEP S203). When pieces of the traffic notification information in the PT's are "1" (YES at STEP S203), it is further judged whether pieces of the traffic notification information in the PT's are changed again (STEP S204). The reason why it is judged whether the traffic notification information is changed again is that there is sometimes a case, where it is preferable for the ATM layer which is an upper layer, to return the contents of the PT's to the original contents after the contents are changed again in the master station, as the contents of the PT's which have been set at the ATM layer are changed in the slave stations.

When it is judged that pieces of traffic notification information in the PT's are required to be changed again (YES at STEP S204), the pieces of the traffic notification information in the PT's are changed again and set as "0", and, at the same time, the HEC values are changed following the setting (STEP S205). Thereafter, reallocation values of the redundant bands for each slave station 20-1 - 20-3 are decided (STEP S206). In addition, inserting values (GRANT value) of pieces of information on permission to use an uplink channel are inserted into PLOAM cells of downlink signals (STEP S207), corresponding to the reallocation values, and the processing moves to STEP S203. Thereby, it is configured that band allocation control for reducing the buffer resident quantities of slave stations in a state of congestion is properly performed.

Though, it is configured in the buffer resident information notification processing performed by the slave stations shown in Fig. 4 that whether the buffer resident quantities are equal to or larger than a fixed threshold is judged in the first place; then, whether there are cells to be read out is decided; and change processing of the PT's and HEC's of the cells to be read out is performed, there may be possible a configuration where it is judged in the first place whether there are cells to be read out; subsequently, it is judged whether the buffer resident quantities are equal to or larger than a fixed threshold; and change processing of the PT's and HEC's of the cells to be read out is performed.

That is, Fig. 6 is a flow chart showing another processing procedure for notification of buffer resident information performed by the slave stations, and, in the first place, a threshold for the buffer resident quantities of the ATM cells in the buffer 25 is set into the buffer resident detection section 26 (STEP S301). Thereafter, the reading-out section 23 judges whether there are cells to be read out in the buffer 25 (STEP S302). When there are cells to be read out (YES at STEP 302), the buffer resident detection section 26 further judges whether the buffer resident quantities are equal to or larger than a fixed threshold (STEP S303).

When the buffer resident quantities are equal to or larger than the threshold (YES at STEP S303), pieces of traffic notification information in the PT's of the cells to be read out are changed; HEC values are changed (STEP S304) following the change; and the processing moves to STEP S302. Here, when there are no cells to be read out (NO at STEP S302), or when the buffer resident quantities are neither equal to nor larger than the threshold (NO at STEP S303), the processing moves to STEP S302. Moreover, the present invention is not limit to the processing procedures shown in Fig. 4, or Fig. 6, and, for example, processing by the reading-out section 23 for judging the presence of the cells to be read out, and that by the buffer resident detection section 26 for judging the buffer resident quantities may be simultaneously performed.

According to the first embodiment, the band allocation control may be performed without narrowing the uplink bands and efficient use of the uplink transmission bands may be realized, as it is configured that the buffer resident detection section 26 judges whether the buffer resident quantities in the buffer 25 are equal to or larger than a fixed threshold, that is, whether the quantities show a congestion state; when the quantities show the congestion state, the PT changing section 24 changes the states of pieces of the traffic notification information in the PT's of the ATM cells to the congestion states, and notifies pieces of the changed traffic notification information to the master station 10; and the master station 10 performs band allocation control for each slave station 20-1 - 20-3, based on pieces of the traffic notification information.

### Second Embodiment:

A second embodiment of the present invention will be described. In this second embodiment, a congestion state of the slave station is configured to be avoided by band allocation control of uplink signals with plural logical paths, though there is only one logical path for uplink signals input to slave stations 20-1 - 20-3 in the first embodiment.

Fig. 7 is a block diagram showing a configuration of an optical multi-branched communication system according to the second embodiment of the present invention. As shown in Fig. 7, each slave station 20-1-20-3 comprises two buffers 25a, 25b, two buffer resident detection sections 26a, 26b for detecting whether buffer resident quantities of each ATM cell in the buffers 25a, 25b are equal to or larger than a predetermined threshold, one PT changing section 24a, or 24b for changing a value of the traffic notification information in the PT of the ATM cell read out from the buffer 25a or 25b, respectively, to "1", and for changing a value of HEC, following the change, when the buffer resident detection sections 26a, 26b detect that the quantities are equal to or larger than the predetermined threshold,and a selective reading-out section 43 for selectively reading each ATM cell read out through the PT changing sections 24a, 24b, and for sending the ATM cells, which have been read out, to an optical transmitter and receiver 21 at timing of time slots corresponding to "GRANT" values which have been extracted by the GRANT extracting section 22. Other parts are the same as those of the first embodiment, and the similar parts are denoted by the same reference numerals as those in the first embodiment.

The "GRANT" values which a master station 10 sets beforehand are set for each slave station 20-1 - 20-3 in a similar manner to that of the first embodiment. with regards to ATM cells of uplink signals which are input to each buffer 25a, or 25b, and ATM cells with different logical paths, buffer resident quantities are detected by the corresponding buffer resident detection section 26a or 26b, respectively, and the results are notified to the PT changing sections 24a, 24b, when the quantities are equal to or larger than the predetermined threshold. When there is a notification from the buffer resident detection section 26a or 26b, each PT changing section 24a or 24b changes the PT values of the ATM cells which are read out from each buffer 25a, or 25b, and outputs the changed values to the selective reading-out section 43. In this case, the selective reading-out section 43 reads out the ATM cells in the buffer 25a, or 25b, alternately, as the "GRANT" values are extracted by the GRANT extracting section 22 one by one. Moreover, the selective reading section 43 tries to read out the ATM cells in the buffer 25b when there are no ATM cells in the buffer 25a, and sends empty cells to the optical transmitter and receiver 21, when there is no ATM cell in any of the buffers 25a, 25b.

According to the second embodiment, the band allocation control may be performed without narrowing the uplink bands and efficient use of the uplink transmission bands may be realized, as it is configured in a similar manner to that of the first embodiment that the congestion states of a plurality of buffers are notified to the master station 10, using pieces of the traffic notification information in the PT's of the ATM cells; and the master station 10 performs band allocation control for each slave station 20-1 - 20-3, based on pieces of the traffic notification information, even when a plurality of uplink signals with different logical paths are sent from the slave stations 20-1 - 20-3 to the master station 10.

### Third Embodiment:

A third embodiment of the present invention will be described. In this third embodiment, "GRANT" values are configured to be set for a plurality of logical paths in each slave station 20-1 - 20-3, though band allocation control is performed by setting a "GRANT" value corresponding to each slave station 20-1 - 20-3.

Fig. 8 is a block diagram showing a configuration of an optical multi-branched communication system according to the third embodiment of the present invention. As shown in Fig. 8, in the present optical multi-branched communication system, different "GRANT" values are previously set for a plurality of logical paths in each slave station 20-1 - 20-3, as described above. For example, in the slave station 20-1, a "GRANT" value is set as "a1" for a logical path of uplink signals which are input into the buffer 25a, and a "GRANT" value is set as "a2" for a logical path of uplink signals which are input into the buffer 25b. In order to extract these two different "GRANT" values, a plurality of GRANT extracting sections 52 for extracting a plurality of different "GRANT" values are provided, instead of the GRANT extracting section 22 shown in the second embodiment.

Moreover, in the optical multi-branched communication system in the second embodiment, separate reading-out sections 23a, 23b corresponding to each buffer 25a, 25b, and, at the same time, an INCLUSIVE-OR section 53 for performing INCLUSIVE-OR operation of the ATM cells which have been read out from each reading-out section 23a, 23b, and for sending the results of the INCLUSIVE-OR operation to the optical transmitter and receiver 21 are provided instead of the selective reading-out section 43 shown in the second embodiment. "GRANT" values which a plurality of GRANT extracting sections 52 have extracted are output to each reading-out section 23a, 23b, and each reading-out section 23a, 23b reads out ATM cells on each logical path from each buffer 25a, 25b, when the output values are in agreement with the "GRANT" values held by the own reading-out section 23a, 23b, that is "a1" and "a2". When there are ATM cells output from each reading out sections 23a, 23b, the INCLUSIVE-OR section 53 sends the output ATM cells to the optical transmitter and receiver 21, respectively, That is, when there is ATM cells which have been read out from the reading-out sections 23a, 23b, the INCLUSIVE-OR section 53 is configured always to be able to send the read-out ATM cells to the optical transmitter and receiver 21. However, as different "GRANT" values are set for each logical path, the ATM cells are sent at time slots corresponding to the "GRANT" values, and there is no duplication between ATM cells which have been read out by each reading-out section 23a, 23b.

According to the third embodiment, fine band allocation control considering service quality of service allocated to each logical path may be realized, and, more particularly, overflow in each buffer 25a, 25b may be securely prevented, respectively, as different "GRANT" values are previously set for each plural logical paths in each slave station 20-1 - 20-3, and band allocation control is performed for each logical path. At the same time, the band allocation control may be performed without narrowing the uplink bands and efficient use of the uplink transmission bands may be realized, as band allocation control is configured to be performed, using the traffic notification information in the PT's in a similar manner to those of the first and second embodiment.

### Forth Embodiment:

A forth embodiment of the present invention will be described. It is configured in the forth embodiment that the buffer resident detection sections 26a, 26b performs congestion notification to devices for ATM multiplexing processing which are provided at the previous step of each slave station 20-1 - 20-3, when the buffer resident quantities of each buffer 25a, 25b become equal to or larger than a predetermined value, and rapid congestion control is realized by congestion control that the devices for performing ATM multiplexing processing performs.

Fig. 9 is a block diagram showing a configuration of an optical multi-branched communication system according to the forth embodiment of the present invention. As shown in Fig. 9, a line card 60, which is a device for multiplexing processing of multiplexed ATM cells input to the buffer 25a, is at a previous stage to the slave station 20-1 in the present optical multi-branched communication system. When the buffer resident quantity of the buffer 25a becomes equal to or larger than a predetermined value, the buffer resident detection section 26a of the slave station 20-1 notifies the congestion state to the PT changing section 24a in a similar manner to that of the third embodiment; makes the PT changing section 24a change the values of the traffic notification information in the PT's to "1", and send the changed values to the master station 10; and sends the congestion notification to the line card 60. Other parts are the same as those of the third embodiment, and the similar parts are denoted by the same reference numerals.

The line card 60 comprises a buffer 65a for buffering of ATM cells of the uplink signals with a VPI of "01", and a buffer 65b for buffering of ATM cells of the uplink signals with a VPI of "02". The line card 60 also comprises buffer resident detection sections 66a, 65b which detect the buffer resident quantities of each buffer 65a, 65b, and notify the congestion state to the PT changing sections 64a, 64b, respectively, when the quantities are equal to or larger than the predetermined threshold. When each PT changing section 64a, 64b receives the notification of the congestion state in a similar manner to those of the PT changing sections 24a, 24b, the sections 64a, 64b changes the values of the traffic notification information in the PT's of the read-out ATM cells to "1", and outputs the changed values to the selective reading-out section 63.

The selective reading-out section 63 selectively reads out ATM cells which have been accumulated in the buffers 65a, 65b for multiplexing the ATM cells, and sends the multiplexed ATM cells to the buffer 25a in the slave station 20-1. Accordingly, the ATM cells input to the buffer 25a has two different logical paths, that is, there are mixed two logical paths with VPI = "01", "02".

The master station 10 sets "GRANT" values for each logical path input to each buffer 25a, 25b in a similar manner to that of the third embodiment. Therefore, the PT extracting section 13 comprises a control table 13a. The control table 13a holds correspondences between the logical paths of each ATM cell and the "GRANT" values, and "GRANT" values are sent together to a shared-band allocation section 12 at extraction of PT's. In this case, each "GRANT" value is associated with a plurality of logical paths . For example, a "GRANT" value = "a1" is associated with VPI = "01", "02".

The line card 60 also comprises a congestion-notification receiving section 62, which receives congestion notification sent from the slave station 20-1. When the congestion notification receiving section 62 receives congestion notification, the congestion notification receiving section 62 notifies the congestion state to the selective reading-out section 63. The selective reading-out section 63 performs control for reducing the sending quantity of the ATM cells, as the buffer 25a as a sending end is in a congestion state. For example, the reading-out quantity from the buffer 65a for accumulating burst data for file transfer requiring no real time performance is suppressed, and the sending quantity of the ATM cells to the buffer 25a is suppressed.

A procedure for buffer resident information notification processing performed by the slave station according to the forth embodiment will be described, referring to a flow chart shown in Fig. 10. As shown in Fig. 10, in the first place, a threshold for the buffer resident quantity of the ATM cells in the buffer 25a is set in the buffer resident detection section 26a (STEP S401). Thereafter, the buffer resident detection section 26a judges whether the buffer resident quantity is equal to or larger than the threshold (STEP S402).

When the buffer resident quantity is equal to or larger than the threshold (YES at STEP S402), the buffer resident detection section 26a performs congestion notification to the line card (STEP S403). Thereafter, whether there are, in the buffer 25a, cells to be read out is judged (STEP S404); when there are cells to be read out (YES at STEP S404), traffic notification information in the PT of the cell to be read out is further changed; the HEC value is changed (STEP S405) following the change; and the processing moves to STEP S402. When the buffer resident quantities are neither equal to nor larger than the threshold (NO at STEP S402), the judgement is repeated, and, when there are no cells to be read out (NO at STEP S404), the judgement is repeated.

In the forth embodiment, overflow of ATM cells in the buffer 25a may be promptly prevented, when there is much time for band allocation control for the master station 10, as it is configured, when ATM cells input to the buffer 25a of the slave station 20-1 are of multiplexed ATM cells, and when the buffer 25a is in a congestion state, that pieces of traffic notification information in the PT's are changed and the congestion state is notified to the master station 10 in a similar manner to that of the third embodiment; thereby, band allocation control is performed; at the same time, there is performed congestion notification to the line card 60 which is a device for multiplexing ATM cells, and provided at the previous stage of the slave station 20-1; and the ATM-cell sending quantities at the side for generating ATM cell information is reduced.

### Fifth Embodiment:

A fifth embodiment of the present invention will be described. In the fifth embodiment, it is configured that each slave station 20-1 - 20-3 does not change the PT's, and the master station 10 extracts the values of the PT's in the headers of the ATM cells as they are, and performs band allocation control based on the extracted results, though the PT's in the headers of the ATM cells are configured to be changed by each slave station 20-1 - 20-3 in any of the first to forth embodiments.

Fig. 11 is a block diagram showing a configuration of an optical multi-branched communication system according to the fifth embodiment of the present invention. As shown in Fig. 11, the present optical multi-branched communication system has a configuration where the buffer resident detection sections 26a, 26b, and the PT changing sections 24a, 24b of the slave station 20-1 shown in the third embodiment are eliminated. Other parts are the same as those of the third embodiment, and the similar parts are denoted by the same reference numerals.

As there are neither the buffer resident detection section 26a nor the buffer resident detection section 26b in the slave station 20-1, the buffer resident quantities in the buffers 25a, 25b are not detected, and PT change by the PT changing sections 24a, 24b is not performed. However, traffic notification information has already been described in the PT's of the ATM cells in the uplink signals input to the slave station 20-1.

Accordingly, the PT extracting section 13 in the master station 10 may perform band allocation control for the buffers 25a, 25b in the slave station 20-1 by extracting the traffic notification information in the PT's of the headers in the ATM cells.

According to the fifth embodiment, the band allocation control of each slave station 20-1 - 20-3 may be performed, while the processing interchangeability with the ATM layer is kept, only by extracting, in the PT extracting section 13, the traffic notification information in the PT's given at the ATM layer after provision of the PT extracting section 13 in the master station 10.

As described above, according to the present invention, as it is configured that the extracting unit extracts traffic notification information which is described in predetermined information in the transmission information transmitted from each slave station device, and notifies the traffic state of the transmission information; the master station device perform allocation processing of the transmission bands, based on the extracted traffic notification information, and notifies the allocation results to each slave station device as the band allocation information, a band allocation request from the slave station devices may not require uplink bands, and band allocation for the slave station devices may be performed, using the traffic notification information in the transmission information. As a result, advantages the transmission efficiency in use of uplink bands may be further improved.

According to another aspect of the present invention, as it is configured that the congestion detection unit of a plurality of the slave station devices detects that the resident quantities of the transmission information to be transmitted to the master station device are equal to or larger than a predetermined threshold; the changing unit changes the contents of the traffic notification information, which is described in predetermined information in the transmission information and notifies the traffic state of the transmission information, to the congestion state, when the congestion detection unit detects that the resident quantities are equal to or larger than the predetermined threshold, and sends the transmission information to the master station device; the extracting unit of the master station device extracts traffic notification information which is described in predetermined information in the transmission information transmitted from each slave station device; the master station device perform allocation processing of the transmission bands, based on the traffic notification information extracted by the extracting unit, and notifies the allocation results to each slave station device as the band allocation information; and, thereby, the band allocation control in each station device is performed, a band allocation request from the slave station devices may not require uplink bands, and the master station device may perform band allocation for the slave station devices, using the traffic notification information in the transmission information. As a result, advantages the transmission efficiency in use of uplink bands may be further improved.

According to still another aspect of the present invention, as it is configured that the changing unit changes the traffic notification in formation of each series of pieces of transmission information which have been read out from each buffer, a band allocation request from the slave station devices may not require uplink bands, and the master station device may perform band allocation for the slave station devices, using the traffic notification information in each transmission information, even when plural series of pieces of transmission information are input to the slave station devices. As a result, advantages the transmission efficiency in use of uplink bands may be further improved.

According to another aspect of the present invention, as it is configured that the master station device performs band allocation processing, as one unit, of plural series of pieces of transmission information which have been input to the plural buffers, fine band-allocation control may be realized, at the same time, a band allocation request from the slave station devices may not require uplink bands, and the master station device may perform band allocation for the slave station devices, using the traffic notification information in each transmission information, even when plural series of pieces of transmission information are input to the slave station devices. As a result, advantages the transmission efficiency in use of up link bands may be further improved.

According to still another aspect of the present invention, as it is configured that the congestion detection unit performs congestion notification to the information multiplexing unit when the resident quantity of transmission information to be transmitted to the master station device is equal to or larger than the predetermined threshold; and the information multiplexing unit performs control to reducing the number of pieces of transmission information to be multiplexed when the congestion notification is received, the sending quantity of the transmission information to the information multiplexing unit may be reduced, when much time is required for band allocation control by the master station device. Accordingly, there are advantages that overflow of the transmission information at the slave station devices may be rapidly prevented.

According to another aspect of the present invention, as it is configured that band allocation unit of the master station device divides the whole bands for all slave station devices into fixed bands which have been previously set for each slave station device, and redundant bands which each slave station device share, and performs allocation processing of the redundant bands based on the traffic notification information extracted by the extracting unit, there are advantages that flexible and secured band allocation processing may be realized.

According to still another aspect of the present invention, as it is configured that the band allocation information is allocated for each logical path, there are advantages that fine band allocation control considering service quality of service allocated to each logical path may be realized.

According to another aspect of the present invention, as it is configured that the traffic notification information is payload-type information in the ATM cell headers, there are advantages that the processing interchangeability with the ATM layer may be kept.

According to still another aspect of the present invention, as it is configured that the extracting unit changes the traffic notification information again to output the transmission information, and the contents of the transmission information are not changed, there are advantages that there is no effect on the transmission information used for the optical multi-branched communication system.

According to another aspect of the present invention, as it is configured that the extracting unit extracts traffic notification information which is described in predetermined information in the transmission information transmitted from each slave station device, and notifies the traffic state of the transmission information, the master station device performs allocation processing of the transmission bands, based on the traffic notification information which the extracting unit has extracted, and notifies the allocation results to each slave station device as the band allocation information, a band allocation request from the slave station devices may not require uplink bands, and the master station device may perform band allocation for the slave station devices, using the traffic notification information in the transmission information. Accordingly, there are advantages that the transmission efficiency in use of uplink bands may be further improved.

According to still another aspect of the present invention, as it is configured that the congestion detection unit detects whether the resident quantity of transmission information to be transmitted to the master station device is equal to or larger than the predetermined threshold, and, when the congestion detection unit detects that the resident quantities are equal to or larger than the predetermined threshold, the changing unit notifies the traffic state of the transmission information which is described in the predetermined information in the transmission information, a band allocation request from the slave station devices may not require uplink bands, and the master station device may perform band allocation for the slave station devices, using the traffic notification information in the transmission information. Accordingly, there are advantages that the transmission efficiency in use of uplink bands may be further improved.

According to another aspect of the present invention, as it is configured that when the resident quantity of transmission information to be transmitted to the master station device is equal to or larger than the predetermined threshold, the congestion detection unit performs congestion notification to the information multiplexing unit, which is at a previous stage to the slave station devices, for multiplexing beforehand plural series of pieces of transmission information which have been input to the slave station devices and the sending quantity of transmission information from the information multiplexing unit is reduced, the sending quantity of the transmission information to the information multiplexing unit may be reduced, when much time is required for band allocation control by the master station device. Accordingly, there are advantages that overflow of the transmission information at the slave station devices may be rapidly prevented.

According to still another aspect of the present invention, as it is configured that each slave station device detects at the congestion detection step whether the resident quantity of transmission information to be transmitted to the master station device is equal to or larger than a predetermined threshold; when it is detected at the congestion detection step that the resident quantity is equal to or larger than the predetermined threshold, the contents of the traffic notification information, which is described in predetermined information of the transmission information, and notifies the traffic state of the transmission information, are changed to a congestion state at the changing step; the master station device extracts traffic notification information in the transmission information at the extracting step, the master station device performs, at the notification step, allocation processing of the transmission bands, based on the traffic notification information which has been extracted at the extraction step, and notifies the allocated results to each slave station device as the band allocation information, and, thereby, band allocation control for each slave station device is performed. a band allocation request from the slave station devices may not require uplink bands, and the master station device may perform band allocation for the slave station devices, using the traffic notification information in the transmission information. Accordingly, there are advantages that the transmission efficiency in use of uplink bands may be further improved.

According to still another aspect of the present invention, as it is configured that congestion notification is performed, at the congestion detection step, to the information multiplexing unit, which is at a previous stage to the slave station devices, for multiplexing beforehand transmission information which are to be input into the slave station devices, when the resident quantity of transmission information to be transmitted to the master station device is equal to or larger than the predetermined threshold, and the sending quantity of the transmission information from the information multiplexing unit is reduced. the sending quantity of the transmission information to the information multiplexing unit may be reduced, when much time is required for band allocation control by the master station device. Accordingly, there are advantages that overflow of the transmission information at the slave station devices may be rapidly prevented.

According to another aspect of the present invention, as it is configured that the band allocation information is allocated for each logical path, there are advantages that fine band allocation control considering service quality of service allocated to each logical path may be realized.

According to still another aspect of the present invention, as it is configured that the traffic notification information is payload-type information in the ATM cell headers, there are advantages that the processing interchangeability with the ATM layer may be kept.

### INDUSTRIAL APPLICABILITY

As described above, an optical multi-branched communication system, and a master station device, slave station devices, and a method of controlling optical multi-branched communication bands, which are used for the optical multi-branched communication system, are suitable for a method in which a plurality of slave stations share a transmission medium and a transmission band, and each slave station performs data transmission to the master station by band control of the master station.

## Claims

1. An optical multi-branched communication system in which a plurality of slave station devices share a transmission medium and a transmission band; a master station device notifies band allocation information for controlling allocation of transmission bands to be used for each slave station device to each of the slave stations; and each slave station device transmits transmission information to the master station device, based on band allocation information notified from the master station device,
wherein said master station device comprises an extracting unit which extracts traffic notification information which is described in predetermined information in the transmission information transmitted from each slave station device, and notifies the traffic state of the transmission information, and
said master station device performs allocation processing of the transmission bands, based on the traffic notification information extracted by said extracting unit, and notifies the allocated results to each of said slave station devices as the band allocation information.

2. The optical multi-branched communication system according to claim 1,
wherein said master station device comprises a band allocation unit which processes allocation of the transmission bands based on the traffic notification information extracted by said extracting unit, and
said band allocation unit divides the whole bands for all of said slave station devices into fixed bands which have been previously set for each of said slave station devices, and redundant bands which each of said slave station devices share, and performs allocation processing of the redundant bands based on the traffic notification information extracted by said extracting unit.

3. The optical multi-branched communication system according to claim 1, wherein the band allocation information is allocated for each logical path of the transmission information.

4. The optical multi-branched communication system according to claim 1, wherein the traffic notification information is payload-type information in ATM cell headers.

5. The optical multi-branched communication system according to claim 1, wherein said extracting unit outputs the transmission information after changing the traffic notification information again.

6. An optical multi-branched communication system in which a plurality of slave station devices share a transmission medium and a transmission band; a master station device notifies band allocation information for controlling allocation of transmission bands to be used for each slave station device to each of the slave stations; and each of said slave station devices transmits transmission information to said master station device, based on band allocation information notified received from said master station device,
wherein each of said slave station devices comprises
a congestion detection unit which detects whether the resident quantity of transmission information to be transmitted to said master station device is equal to or larger than a predetermined threshold, and
a changing unit which changes the contents of the traffic notification information, which is described in predetermined information of the transmission information, to a congestion state, when said congestion detection unit detects that the resident quantity is equal to or larger than the predetermined threshold, and notifies the traffic state of the transmission information;
wherein said master station device comprises an extracting unit which extracts traffic notification information which is described in predetermined information in transmission information transmitted from each of said slave station devices; and
said master station device performs allocation processing of the transmission bands based on the traffic notification information extracted by said extracting unit, and notifies the allocated results as the band allocation information to each of said slave stations.

7. The optical multi-branched communication system according to claim 6, wherein each of said slave station devices further comprises
a plurality of buffers for temporary accumulation of plural series of pieces of transmission information to be output to the master station device, and
a selective reading-out unit which selectively reads out, based on the band allocation information from said master station device, each series of pieces of transmission information which have been temporarily accumulated in the plural buffers,
wherein said changing unit changes the traffic notification information of each series of pieces of transmission information which have been read out from each of said buffers.

8. The optical multi-branched communication system according to claim 6, wherein each of said slave station devices further comprises
a plurality of buffers for temporary accumulation of plural series of pieces of transmission information to be output to said master station device,
a plurality of reading-out units which reads-out, based on the band allocation information from said master station device, a series of pieces of transmission information, respectively, which are corresponding to said buffers, respectively, and have been temporarily accumulated in each of said buffers, and
an INCLUSIVE-OR operation unit which performs INCLUSIVE-OR operation with respect to the transmission information, which have been read out by each of said reading-out units, to send the operation results to said master station device,
wherein said changing unit changes the traffic notification information of each series of pieces of transmission information which have been read out from each of said buffers, and
wherein said master station device performs band allocation processing of each series of plural pieces of transmission information which have been input to a plurality of the buffers.

9. The optical multi-branched communication system according to claim 6, further comprising an information multiplexing unit provided at a previous stage to said slave station devices, for multiplexing beforehand plural series of pieces of transmission information which are to be input into each of said slave station devices,
wherein said congestion detection unit of each of said slave station devices performs congestion notification to said information multiplexing unit when the resident quantity of transmission information to be transmitted to said master station device is equal to or larger than the predetermined threshold, and
said information multiplexing unit performs control to reducing the number of pieces of transmission information to be sent to said slave station devices after multiplexing, when the congestion notification is received.

10. The optical multi-branched communication system according to claim 6,
wherein said master station device comprises a band allocation unit which processes allocation of the transmission bands based on the traffic notification information extracted by said extracting unit, and
said band allocation unit divides the whole bands for all of said slave station devices into fixed bands which have been previously set for each of said slave station devices, and redundant bands which each of said slave station devices share, and performs allocation processing of the redundant bands based on the traffic notification information extracted by said extracting unit.

11. The optical multi-branched communication system according to claim 6, wherein the band allocation information is allocated for each logical path of the transmission information.

12. The optical multi-branched communication system according to claim 6, wherein the traffic notification information is payload-type information in ATM cell headers.

13. The optical multi-branched communication system according to claim 6, wherein said extracting unit outputs the transmission information after changing the traffic notification information again.

14. A master station device which is used for an optical multi-branched communication system in which a plurality of slave station devices share a transmission medium and a transmission band, wherein the master station device notifies band allocation information for controlling allocation of transmission bands to be used for each slave station device to each of said slave stations; and each of said slave station devices transmits transmission information to said master station device, based on band allocation information notified from said master station device,
wherein said master station device comprises an extracting unit which extracts traffic notification information which is described in predetermined information in the transmission information transmitted from each slave station device, and notifies the traffic state of the transmission information, and
wherein an allocation processing of the transmission bands is performed, based on the traffic notification information extracted by said extracting unit, and
the allocated results are allocated to each of said slave station devices as the band allocation information.

15. A slave station device which is used for an optical multi-branched communication system in which a plurality of slave station devices share a transmission medium and a transmission band; a master station device notifies band allocation information for controlling allocation of transmission bands to be used for each slave station device to each of said slave stations; and each of said slave station devices transmits transmission information to said master station device, based on band allocation information notified from said master station device,
wherein said slave station device comprises
a congestion detection unit which detects whether the resident quantity of transmission information to be transmitted to said master station device is equal to or larger than a predetermined threshold, and
a changing unit in which the contents of the traffic notification information which is described in predetermined information of the transmission information and notifies the traffic state of the transmission information are changed to the congestion state, when said congestion detection unit detects that the resident quantity is equal to or larger than the predetermined threshold.

16. The slave station device according to claim 15, further comprising an information multiplexing unit provided at a previous stage to said slave station devices, for multiplexing beforehand plural series of pieces of transmission information which are to be input into each of said slave station devices, and
wherein said congestion detection unit performs congestion notification to said information multiplexing unit which is provided at a previous stage to said slave station devices, for multiplexing beforehand plural series of pieces of transmission information which are to be input into the slave station devices, when the resident quantity of transmission information to be transmitted to said master station device is equal to or larger than the predetermined threshold, and the number of transmission information transmitted by said information multiplexing unit is reduced.

17. A method of controlling optical multi-branched communication bands, by which a plurality of slave station devices share a transmission medium and a transmission band; a master station device notifies band allocation information for controlling allocation of transmission bands to be used for each slave station device to each of the slave stations; and each of said slave station devices transmits transmission information to said master station device, based on band allocation information notified from the master station device, the method comprising:
a congestion detection step in which each of said slave station devices detects whether the resident quantity of transmission information to be transmitted to said master station device is equal to or larger than a predetermined threshold,
a changing step in which, when it is detected at the congestion detection step that the resident quantity is equal to or larger than the predetermined threshold, the contents of the traffic notification information, which is described in predetermined information of the transmission information, and notifying the traffic state of the transmission information, are changed to a congestion state,
an extracting step in which said master station device extracts traffic notification information in the transmission information, and
a notification step in which said master station device performs allocation processing of the transmission bands, based on the traffic notification information extracted in the extraction step; and notifying the results of allocation to each of said slave station devices as the band allocation information.

18. The method of controlling optical multi-branched communication bands according to claim 17,
wherein when the resident quantity of transmission information to be transmitted to said master station device is equal to or larger than the predetermined threshold, congestion notification is performed, at the congestion detection step, to an information multiplexing unit which is provided at a previous stage to said slave station devices, for multiplexing beforehand transmission information which are to be input into each of said slave station devices, and the number of pieces of transmission information to be transmitted from said information multiplexing unit is reduced.

19. The method of controlling optical multi-branched communication bands according to claim 17, wherein the band allocation information is allocated for each logical path of the transmission information.

20. The method of controlling optical multi-branched communication bands according to claim 17, wherein the traffic notification information is payload-type information in ATM cell headers.
